# FASCICULE DE BREVET EUROPEEN

(11) **EP 3 049 283 B1**
(45) Date de publication et mention de la délivrance du brevet: **09.09.2020**
(21) Numéro de dépôt: 14777568.8
(22) Date de dépôt: 26.09.2014
(51) Int. Cl.: B60Q 1/14, B60J 3/04

(54) **DISPOSITIF ET PROCÉDÉ D'AIDE À LA CONDUITE**
VORRICHTUNG UND VERFAHREN ZUR FAHRASSISTENZ
DRIVING ASSISTANCE DEVICE AND METHOD

(30) Priorité: 26.09.2013 FR 1359280
(43) Date de publication de la demande: 03.08.2016
(73) Titulaire: Valeo Vision, 93012 Bobigny Cedex (FR)
(72) Inventeur: EL IDRISSI, Hafid, F-93500 Pantin (FR); BEEV, Kostadin, F-77184 Emerainville (FR); HUE, David, F-95430 Butry Sur Oise (FR); GRATIEN, Steed, F-77340 Pontault Combault (FR); ROCKLINGER, Marc, F-74380 Bonne (FR)
(86) Numéro de dépôt international: PCT/EP2014/070688
(87) Numéro de publication internationale: WO 2015/044384

(56) Documents cités:
- DE-A1-102012 008 913
- US-A- 4 286 308
- US-A1- 2012 126 099
- US-B1- 7 970 172

## Description

L'invention concerne un dispositif et un procédé d'aide à la conduite d'un véhicule automobile, selon le préambule de la revendication 1. Un tel dispositif est connu de US 7970172 B.

La présente invention concerne les procédés et les dispositifs destinés à apporter une aide à la conduite des véhicules automobiles, particulièrement lorsque la luminosité extérieure ou les variations de luminosité extérieure peuvent perturber la conduite du conducteur.

Pendant le déplacement du véhicule, le conducteur d'un véhicule doit regarder en permanence vers l'extérieur du véhicule pour prévenir de tout danger susceptible de provoquer un accident. Or, la vision du conducteur est régulièrement perturbée par la luminosité extérieure, que ce soit par éblouissement dû au soleil, dû aux feux d'un véhicule croisé ou d'un véhicule suivant, ou bien par variation brusque de luminosité telle qu'une entrée ou sortie d'un tunnel.

Dans une optique d'améliorer le confort et la sécurité du conducteur, plusieurs solutions ont été proposées. L'une d'entre elle consiste à utiliser un écran à transmission variable, sous la forme par exemple de lunettes portées par le conducteur, dont la transparence varie en fonction d'un coefficient de transmission appliqué audit écran. Le calcul de ce coefficient est par exemple effectué à partir d'une mesure de luminosité par un unique capteur situé sur le véhicule. Ainsi, le coefficient de transmission s'adapte à la luminosité ambiante détectée par ledit capteur pour régler la transparence de l'écran à transmission variable.

Néanmoins, cette solution ne permet pas d'adapter le coefficient de transmission à suffisamment de situations que peut rencontrer le véhicule et qui nécessitent un traitement particulier. Par exemple, lorsqu'une forte source lumineuse éblouit le conducteur, l'écran à transmission variable va réduire sa transparence et donc amoindrir la vision du conducteur pour empêcher l'éblouissement. Néanmoins dans ce cas, si le conducteur regarde une autre zone de la route plus sombre, la transparence réduite de l'écran à transmission variable va réduire sa visibilité dans cette zone plus sombre alors qu'un piéton ou un feu tricolore que le conducteur ne verra pas ou peu peut se situer dans cette zone. On comprend aisément le danger que représente une telle situation.

L'invention vise à pallier au moins certains des inconvénients des dispositifs et procédés d'aide à la conduite connus.

Pour ce faire, l'invention concerne un dispositif d'aide à la conduite d'un véhicule automobile, comprenant un écran à transmission variable destiné à être disposé entre une scène de route à l'avant du véhicule et un conducteur du véhicule, ledit dispositif comprenant plusieurs capteurs aptes à récupérer des données représentatives de l'environnement dans lequel se trouve le véhicule, ledit dispositif étant configuré pour piloter un coefficient de transmission de l'écran à transmission variable, caractérisé en ce que le dispositif est configuré pour prendre en compte les données récupérées par les capteurs et pour calculer le coefficient de transmission en combinant lesdites données.

Un dispositif selon l'invention permet donc de s'appuyer sur plusieurs données pour permettre d'ajuster le coefficient de transmission par combinaison de ces données, et non de ne tenir compte que d'une seule donnée. Ainsi, l'écran à transmission variable a une transparence qui s'adapte au contexte représenté par les diverses données des divers capteurs. Par exemple, si un capteur détecte une forte luminosité provenant d'un véhicule arrivant en sens inverse, mais qu'un autre capteur détecte que le regard du conducteur est dirigé vers un autre endroit, il n'est pas nécessaire de réduire la transparence de l'écran à transmission variable, d'autant plus que cette réduction de la transparence de l'écran à transmission variable pourrait provoquer une réduction de la vision du conducteur alors que son regard est porté vers une zone dans lequel peut se trouver un danger, comme un autre véhicule dans une intersection, un feu tricolore, un piéton qui traverse la route, etc.

Avantageusement et selon l'invention, les capteurs sont aptes à récupérer les données représentatives de l'environnement parmi un ou plusieurs des types de données suivantes :
- Les conditions atmosphériques telles que :
   ∘ La pluie, le vent, la neige, le brouillard, etc...
   ∘ L'heure de la journée
   ∘ Etc...
- L'environnement routier tel que
   ∘ L'état du sol,
   ∘ L'éblouissement par un autre véhicule ou par une source lumineuse fixe, ∘ La nature de la route (virage, tunnel, autoroute, etc...)
   ∘ La géolocalisation,
   ∘ La vitesse du véhicule,
   ∘ Etc...
- L'environnement du conducteur tel que :
   ∘ L'orientation de sa tête,
   ∘ L'orientation de son regard,
   ∘ Etc...
cette liste n'étant ni limitative, ni exhaustive, de nombreuses autres données pouvant être utilisées.

Selon cet aspect de l'invention, un ou plusieurs de ces types de données sont utilisés pour calculer au mieux le coefficient de transmission optimal à appliquer à l'écran à transmission variable.

Avantageusement et selon l'invention, le dispositif est apte à déterminer une situation dans laquelle se trouve le véhicule et/ou le conducteur à partir de toutes ou parties des données récupérées.

Selon cet aspect de l'invention, ladite situation est sélectionnée parmi plusieurs types de situation prédéterminés qu'il est important de prendre en compte pour le calcul du coefficient de transmission. Par exemple, les situations combinent une ou plusieurs des alternatives suivantes décrivant le contexte dans lequel se trouve le véhicule : conduite de jour ou nuit, temps ensoleillé, nuageux ou pluvieux, conduite en ville ou en campagne, passage dans un tunnel ou non, etc. Une situation pourra par exemple être la combinaison suivante : conduite en ville de jour par un temps nuageux. Les situations peuvent aussi caractériser des états intermédiaires ou des degrés de variations de ces combinaisons simples, telle que par exemple pluie faible/pluie forte, aube/crépuscule, etc.

Avantageusement et selon l'invention, le dispositif est apte à déterminer ladite situation à partir des données récupérées parmi les données suivantes :
- Les conditions atmosphériques,
- L'environnement routier,
- L'environnement du conducteur :
   cette liste n'étant ni limitative, ni exhaustive, de nombreuses autres données pouvant être utilisées.

Selon cet aspect de l'invention, le dispositif utilise une ou plusieurs de ces informations pour déterminer la situation dans laquelle se trouve le véhicule. Par exemple et en lien avec l'exemple du paragraphe précédent, une conduite de jour en ville par temps nuageux sera déterminée grâce aux données de géo-localisation pour la conduite en ville, grâce aux données horaire pour la conduite de jour et grâce aux données de conditions météorologique pour le temps nuageux. L'ensemble de ces données permettent donc de déterminer une situation.

Avantageusement et selon l'invention, le dispositif est configuré pour attribuer un poids à tout ou partie des données récupérées en fonction de ladite situation du véhicule et pour pondérer lesdites données par leur poids correspondant dans le calcul du coefficient de transmission.

Selon cet aspect de l'invention, l'attribution de poids aux données récupérées en fonction de la situation déterminée du véhicule permet un calcul du coefficient de transmission tenant compte du poids des données et donc permettant un calcul du coefficient de transmission plus adapté à la situation déterminée. En effet, en fonction de la situation déterminée, certaines données ont d'avantage d'importance dans le calcul du coefficient de transmission.

Selon l'invention, un premier desdits capteurs est un capteur configuré pour mesurer une luminosité dans l'axe du véhicule et un second desdits capteurs est un capteur configuré pour mesurer une luminosité dans une autre direction, ledit dispositif étant configuré pour prendre en compte l'orientation de la tête du conducteur et effectuer ledit calcul en fonction des données relevées par le premier et le second capteur et en fonction de ladite orientation de la tête.

Selon cet aspect de l'invention, le dispositif comprend, parmi ses capteurs, au moins deux capteurs de luminosité, l'un étant configuré pour mesurer la luminosité dans l'axe du véhicule de façon par exemple à détecter un éblouissement provoqué par l'éclairage d'un véhicule arrivant en sens inverse. Le dispositif prend en compte l'orientation du regard du conducteur et pondère les données de luminosité relevées par les deux capteurs en conséquence : par exemple, si le conducteur regarde dans une direction correspondant à l'axe du véhicule, les données du capteur dirigé dans cet axe seront prépondérantes sur les données provenant du deuxième capteur dans le calcul du coefficient de transmission de l'écran à transmission variable. Au contraire, si le conducteur regarde principalement dans la direction du deuxième capteur, les données issues de ce dernier seront prépondérantes dans le calcul du coefficient de transmission de l'écran à transmission variable. Entre ces deux directions, le dispositif pourra affecter des poids intermédiaires aux données selon l'orientation du regard du conducteur.

Avantageusement et selon l'invention, l'écran à transmission variable comprend des lunettes et ledit second capteur est situé sur lesdites lunettes.

Selon cet aspect de l'invention, le deuxième capteur est situé au plus près des yeux du conducteur et donc donnent une information précise sur la luminosité qui lui parvient. Ainsi, par exemple, si le conducteur regarde dans une direction autre que l'axe du véhicule, les données issues du deuxième capteur seront prépondérantes dans le calcul du coefficient de transmission : ces données sont celles reçues au plus proche de la vision du conducteur, et donc lui permette par exemple de garder une vision nette s'il regarde sur le côté, pour vérifier par exemple la présence de piéton qui traverserait la route, d'un feu tricolore ou bien d'un véhicule provenant d'une intersection.

Avantageusement et selon l'invention, le dispositif comprend un éclairage pulsé, ledit dispositif étant configuré pour piloter ledit éclairage pulsé, dans un premier mode en synchronisme avec le coefficient à transmission, et, dans un second mode, indépendamment dudit coefficient.

L'invention concerne également un procédé d'aide à la conduite d'un véhicule automobile, ledit véhicule étant équipé d'un écran à transmission variable destiné à être disposé entre une scène de route à l'avant du véhicule et un conducteur du véhicule, ledit procédé comportant une étape de récupération de données représentatives de l'environnement dans lequel se trouve le véhicule, et une étape de pilotage d'un coefficient de transmission de l'écran à transmission variable, caractérisé en ce que ledit procédé comporte une étape de prise en compte des données récupérées dans l'étape de récupération et une étape de calcul du coefficient de transmission par combinaison desdites données.

Un procédé selon l'invention permet donc de s'appuyer sur plusieurs types de données pour permettre d'ajuster le coefficient de transmission par combinaison de ces données, et non de tenir compte que d'une seule donnée récupérée.

Avantageusement et selon l'invention, lesdites données représentatives de l'environnement sont choisies parmi un ou plusieurs des types de données suivant :
- Les conditions atmosphériques telles que :
   ∘ La pluie, le vent, la neige, le brouillard, etc...
   ∘ L'heure de la journée
   ∘ Etc...
- L'environnement routier tel que
   ∘ L'état du sol,
   ∘ L'éblouissement par un autre véhicule ou par une source lumineuse fixe,
   ∘ La nature de la route (virage, tunnel, autoroute, etc...)
   ∘ La géolocalisation,
   ∘ La vitesse du véhicule,
   ∘ Etc...
- L'environnement du conducteur tel que :
   ∘ L'orientation de sa tête,
   ∘ L'orientation de son regard,
   ∘ Etc...
cette liste n'étant ni limitative, ni exhaustive, de nombreuses autres données pouvant être utilisées.

Avantageusement et selon l'invention, le procédé comprend une étape de détermination d'une situation dans laquelle se trouve le véhicule à partir des données récupérées.

Avantageusement et selon l'invention, ladite étape de détermination de ladite situation s'effectue à partir des données récupérées parmi les données suivantes :
- Les conditions atmosphériques,
- L'environnement routier,
- L'environnement du conducteur :
   cette liste n'étant ni limitative, ni exhaustive, de nombreuses autres données pouvant être utilisées.

Avantageusement et selon l'invention, le procédé comprend une étape d'attribution d'un poids à tout ou partie des données récupérées en fonction de ladite situation du véhicule et en ce qu'il comprend une étape de pondération des données par leur poids correspondant pour le calcul du coefficient de transmission.

Avantageusement et selon l'invention, le procédé comprend une étape de récupération de données de luminosité dans l'axe du véhicule et dans une autre direction et une étape de détection de l'orientation de la tête du conducteur. De plus, ladite étape de calcul est effectuée en prenant en compte lesdites données de luminosité en fonction de ladite orientation de la tête.

Avantageusement et selon l'invention, le procédé comprend une première étape de pilotage d'un éclairage pulsé du véhicule, en synchronisme avec le pilotage du coefficient de transmission et une seconde étape de pilotage desdits éclairage indépendamment de ce dernier pilotage du coefficient de transmission.

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique de l'avant d'un véhicule et d'un dispositif d'aide selon l'invention,
- La figure 2 est une vue schématique d'un dispositif d'aide selon l'invention,
- La figure 3 est une vue schématique d'un procédé d'aide selon l'invention,
- la figure 4 est une vue schématique d'une situation dans laquelle le conducteur du véhicule regarde vers l'avant du véhicule,
- la figure 5 est une vue schématique d'une situation dans laquelle le conducteur du véhicule regarde vers le côté du véhicule,
- la figure 6 est une vue schématique d'une situation dans laquelle le conducteur du véhicule regarde vers le côté du véhicule selon un angle différent,
- la figure 7 est une vue schématique d'un dispositif d'aide selon un mode de réalisation de l'invention.

L'invention concerne un dispositif et un procédé d'aide à la conduite d'un véhicule, dont l'un des objectifs est le calcul du coefficient de transmission d'un écran à transmission variable. Cet écran à transmission variable est disposé dans le champ de vision du conducteur du véhicule, entre ce dernier et la scène de route. Selon différents modes de réalisation de l'invention, l'écran à transmission variable peut être constitué :
- d'un écran proprement dit, placé entre le conducteur et le pare-brise, par exemple rabattable à la façon d'un pare-soleil,
- du pare-brise lui-même, ou
- d'une paire de lunettes, portées par le conducteur, à l'instar de lunettes de soleil ou lunettes correctrices.

Le niveau de transparence de l'écran à transmission variable est défini par un coefficient de transmission de l'écran à transmission variable, piloté par le dispositif d'aide, et variant entre une valeur maximale correspondant à une transparence maximale de l'écran, et une valeur minimale correspondant à une transparence minimale de l'écran. La modification du coefficient de transmission entraine ainsi une modification de la transparence de l'écran à transmission variable, permettant ainsi au conducteur de bénéficier d'une modification de la luminosité perçue.

Par la suite, le mode de réalisation décrit utilisera les lunettes 10 comme écran à transmission variable, sans pour autant réduire la portée de protection à un tel mode de réalisation.

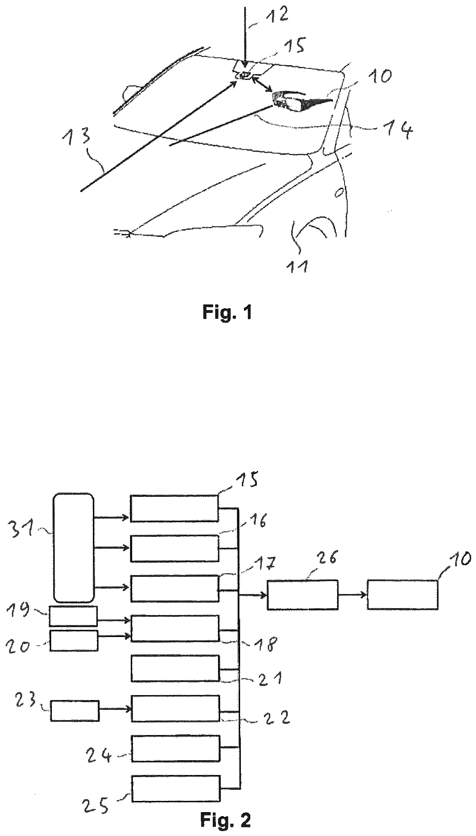

La figure 1 représente schématiquement l'avant d'un véhicule 11 comportant des capteurs destinés à récupérer des informations nécessaire au calcul du coefficient de transmission des lunettes 10. On constate que la multiplicité des capteurs permet la prise en compte de données de luminosité provenant de directions 12, 13 et 14 différentes et permettant donc un calcul plus adapté du coefficient de transmission. Ainsi, en référence à la figure 1, un capteur de luminosité, de pluie et de tunnel 15 situé au niveau du haut du pare-brise, de préférence au niveau de l'attache d'un rétroviseur intérieur audit pare-brise, capte la luminosité provenant de plusieurs directions 12, 13 et 14, par exemple et comme représenté, de l'axe du véhicule 11 vers l'avant, et du dessus du véhicule 11. Un second capteur, situé sur les lunettes 10, permet de capter la lumière en direction du regard ou à tout le moins de la tête du conducteur.

La figure 2 représente schématiquement un dispositif selon l'invention. Ledit dispositif comprend une multitude de capteurs, ici :
- une photodiode 16 située sur les lunettes 10, récupérant des données de luminosité dans la direction du regard du conducteur ;
- un capteur de luminosité, de pluie et de température 15 (aussi désigné par capteur RLT, pour Rain Light Tunnel), récupérant des données de luminosité provenant de plusieurs directions 12, 13 (par exemple au dessus du véhicule 12 et en face du véhicule 13), et des données de conditions météorologiques ;
- une caméra 17, permettant de récupérer des données de luminosité dans plusieurs directions ;
- un système de navigation 18, par exemple un GPS, récupérant des données de géo-localisation 19 et permettant de les corréler avec des données cartographiques 20, pour par exemple déterminer si le véhicule 11 se trouve en ville, à la campagne, sous un tunnel, etc. ;
- un système de récupération de données horaires 21, de préférence synchronisé avec un serveur de temps sur une heure de référence, par exemple en utilisant le GPS, afin de déterminer si la conduite se fait de jour ou de nuit ;
- un système de récupération de données météorologiques 22, connecté par exemple à l'Internet 23, afin de déterminer les conditions météorologiques (par exemple ensoleillé, nuageux, pluvieux, etc.) dans la zone où circule le véhicule 11 ;
- un système de détection de l'orientation de la tête du conducteur 24, comportant par exemple des accéléromètres et/ou gyroscopes ;
- un système de mesure de la vitesse du véhicule 25, intégré de façon classique à la majorité des véhicules.

Autrement dit, les trois premiers capteurs 15, 16 et 17 captent la luminosité 31 provenant de plusieurs directions.

Un véhicule 11 équipé d'un dispositif selon l'invention comprendra avantageusement certains de ces capteurs, de préférence tous, ainsi qu'éventuellement d'autres capteurs non cités ici.

Ces données récupérées sont ensuite traitées, par exemple dans un microcontrôleur 26 qui contrôle également, ici, le pilotage du coefficient de transmission des lunettes 10. Le traitement a plusieurs objectifs : un premier objectif est de déterminer à partir des données récupérées une situation dans laquelle se trouve le véhicule 11 ; un deuxième objectif est de combiner les données récupérées pour calculer le coefficient de transmission, de préférence en pondérant les données récupérées selon la situation déterminée. Dans un mode de réalisation de l'invention, le microcontrôleur 26 est situé dans les lunettes 10 et les données relevées par les autres capteurs sont transmises grâce à des liaisons sans-fil.

La détermination de la situation dans laquelle se trouve le véhicule 11 permet d'adapter le calcul du coefficient de transmission en fonction d'éléments extérieurs influençant le type et l'importance de la luminosité extérieure. Par exemple, une même luminosité provenant de l'éclairage d'un véhicule croisé ne provoquera pas le même effet au conducteur selon qu'il fasse jour ou nuit. Ainsi, le dispositif détermine la situation dans laquelle se trouve le véhicule 11, selon une combinaison d'éléments extérieurs représentative du type de conduite telle que : conduite de jour, de nuit ou pendant le lever ou coucher du soleil, conduite en ville, en campagne ou sous un tunnel, temps ensoleillé, nuageux ou pluvieux, moteur allumé ou non, conducteur dans la voiture ou non. Les situations qu'il est possible de déterminer dépendent des données récupérées et donc des différents capteurs présents sur le véhicule 11. Une autre information importante pouvant intervenir dans la situation est l'orientation de la tête du conducteur. Selon le mode de réalisation où l'écran à transmission variable est une paire de lunettes 10, un capteur de luminosité 16 est avantageusement placé sur ces lunettes 10, comme présenté à la figure 1, de façon à récupérer les données de luminosité au plus proche des yeux du conducteur et en direction de son regard. Ainsi, si le conducteur oriente sa tête dans une direction autre que dans l'axe du véhicule 11, une importance plus importante sera accordée au capteur 16 situé sur ses lunettes 10. Cela a pour but de ne pas réduire sa visibilité si une forte luminosité est détectée dans l'axe du véhicule 11 alors que le conducteur regarde en direction d'une zone qui elle est faiblement éclairée, auquel cas la forte luminosité dans l'axe du véhicule 11 ne le gênera pas.

Une fois la situation du véhicule 11 déterminée, le dispositif d'aide attribue un poids aux données récupérées en fonction de la situation déterminée à l'étape préalable. Les poids ainsi attribués permettent la pondération des données pour effectuer le calcul du coefficient de transmission. Ainsi, il est possible d'attribuer à chaque donnée utilisée pour le calcul une importance différente selon la situation

Par exemple, dans le cas où le conducteur regarde à l'arrière du véhicule 11 pour effectuer une marche arrière, les données provenant d'un capteur de luminosité situé à l'avant du véhicule 11, tel que le capteur de luminosité, de pluie et de température 15 ou la caméra 17, ont un intérêt très faible. Le dispositif tient alors compte principalement des données provenant d'un capteur situé à l'arrière du véhicule 11, telle qu'une caméra de recul, et/ou du capteur 16 présent sur les lunettes 10.

Autre exemple, lorsque le véhicule 11 entre dans un tunnel, le capteur 16 situé sur les lunettes 10 ne suffit plus pour estimer la luminosité extérieure du véhicule 11. On accorde alors plus de poids au capteur de luminosité, pluie et tunnel 15 situé sur le pare-brise du véhicule 11, ou à la caméra 17.

Enfin, dans le cas où le conducteur est à l'extérieur du véhicule 11 et/ou le moteur est arrêté, le capteur prépondérant est le capteur 16 situé sur les lunettes 10. Dans le mode de réalisation où le microcontrôleur 26 est situé dans les lunettes 10, le microcontrôleur 26 ne reçoit alors que les informations provenant du capteur situé dans les lunettes 10. C'est ainsi qu'il en déduit que le conducteur est à l'extérieur du véhicule 11.

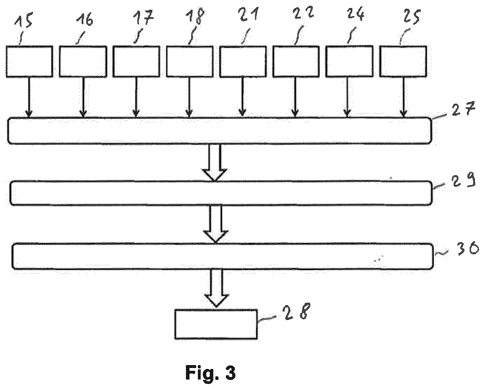

Le fonctionnement du dispositif d'aide selon l'invention et le procédé d'aide selon l'invention sont détaillés dans la figure 3. Les données des différents capteurs 15, 16, 17, 18, 21, 22, 24 et 25 décrit précédemment sont récupérées lors d'une étape de récupération 27 de données représentatives de l'environnement dans lequel se trouve le véhicule 11. La dernière étape représentée est l'étape de pilotage 28 du coefficient de transmission de l'écran à transmission variable. Entre ces deux étapes se trouvent une étape de prise en compte 29 des données récupérées dans l'étape de récupération et une étape de calcul 30 du coefficient de transmission par combinaison desdites données.

L'étape de récupération consiste pour le microcontrôleur 26 à récupérer les données que lui transmette les différents capteurs, de préférence par une connexion sans-fil lorsque le microcontrôleur 26 se trouve dans les lunettes 10. Une fois les données récupérées, l'étape de prise en compte comprend une étape de détermination (non représentée) de la situation dans laquelle se trouve le véhicule 11. Ladite étape de détermination de la situation pourra se baser sur une estimation de la connaissance apportée par les différentes données issues des différents capteurs. Par exemple, en cas de forte luminosité captée par le capteur RLT 15 en provenance du dessus du véhicule, le microcontrôleur 16 supposera que les conditions météorologiques sont un fort ensoleillement. Si cette supposition est confirmée par les conditions météorologiques relevées sur l'Internet, le microcontrôleur considérera que la conduite est de jour et par temps ensoleillé. Sinon, il faudra prendre en compte d'autres données, comme par exemple la luminosité relevée par les autres capteurs tel que la caméra.

Une fois la situation dans laquelle se trouve le véhicule déterminée, suit l'étape de calcul 30 du coefficient de transmission. Cette étape comprend une étape de d'attribution (non représentée) d'un poids à tout ou partie des données récupérées en fonction de la situation du véhicule déterminée dans l'étape de détermination décrite précédemment. Le poids attribué à chaque donnée pourra en particulier dépendre de son importance estimée dans le calcul de la luminosité. De façon générale, l'attribution des poids dépend de la stratégie de combinaison retenue. La pondération des données et leur pondération peut avantageusement utiliser différentes méthodes issues de la théorie dite des croyances. Notamment, la théorie de Dempster-Shafer qui utilise l'équation de Dempster-Shafer donne des résultats probants.

Une fois les poids attribués à chaque donnée, le microcontrôleur 26 calcule le coefficient de transmission en prenant compte les données pondérées déterminées à l'étape précédente. Ce coefficient de transmission calculé est alors utilisé pour piloter l'écran à transmission variable.

Un exemple de déroulement du procédé est détaillé ci-après. Les données relevées par les différents capteurs sont récupérées par le microcontrôleur 26. Certaines de ces données vont permettre de déterminer la situation du véhicule 11. Par exemple, le système GPS 18 indique que, grâce à la consultation de données cartographiques 20, le véhicule 11 se trouve sur une route de campagne, et grâce à l'horodatage des données de géo-localisation 19, que l'heure est 2:00 PM dans le fuseau horaire où se trouve le véhicule. La consultation des données météorologiques indique que le temps est ensoleillé, et le capteur de pluie ne détecte pas de pluie. La situation est donc une combinaison de ces éléments : conduite de jour, sur route de campagne, par temps ensoleillé.

Le microcontrôleur 26 pondère les données provenant des capteurs de luminosité en fonction des réglages prédéterminés. Les poids sont, dans cet exemple: 70% pour le capteur 16 sur les lunettes 10, 80% pour la luminosité verticale (venant d'au dessus) du capteur RLT 15, 80% pour la luminosité horizontale (venant d'en face) du capteur RLT 15, et 80% pour la caméra 17.

Les données de luminosité sont exprimées dans cet exemple par une valeur de 0 à 100 (qui peut être exprimée en pourcentage), représentant respectivement le minimum de luminosité mesurable par le capteur et le maximum de luminosité mesurable par le capteur. Les capteurs relèvent par exemple : 30% pour le capteur 16 des lunettes 10, 70% pour le capteur RLT 15 verticalement, 50% pour le capteur RLT 15 horizontalement, 50% pour la caméra 17. En pondérant ces valeurs par les poids exprimés ci-dessus, on obtient (par produit de pourcentages) des valeurs de : 21 % pour le capteur 16 des lunettes 10, 56% pour le capteur RLT 15 verticalement, 40% pour le capteur RLT 15 horizontalement, 40% pour la caméra 17. La moyenne de ces valeurs donne une valeur de 39% correspondant à l'intensité moyenne de luminosité mesurée. Ainsi, pour améliorer la visibilité du conducteur, il faut baisser cette luminosité en abaissant le coefficient de transmission des lunettes 10, et donc la transparence, à 100-39 = 61%. Le microcontrôleur 26 règle donc dans cet exemple le coefficient de transmission des lunettes 10 à cette valeur de 61%. Dans cet exemple, la corrélation luminosité/coefficient de transparence est volontairement simplifié par une simple équation linéaire y=100-x avec y le coefficient de transmission et x l'intensité moyenne de luminosité mesurée, mais l'équation peut être plus complexe, avec notamment des valeurs extrêmes différentes pour qu'il ne soit pas possible que le coefficient de transmission soit réglé à 0% ce qui correspondrait à un écran à transmission variable totalement opaque qui n'est pas envisageable pour la conduite automobile.

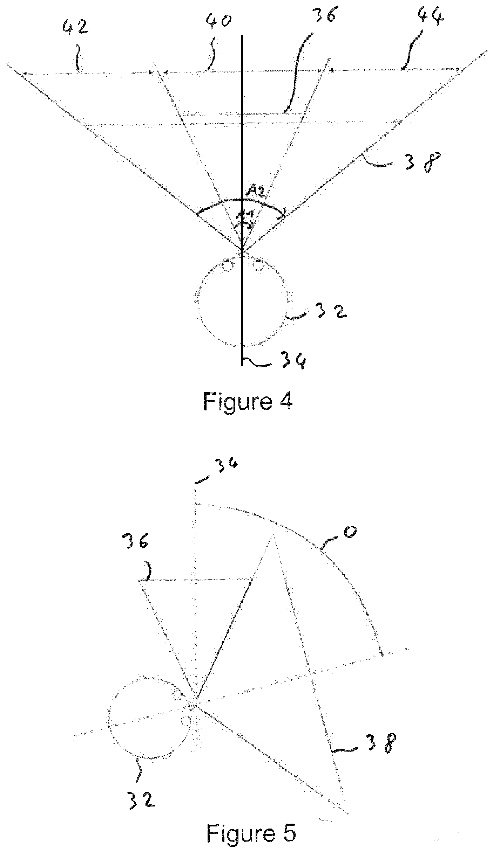

Selon un mode de réalisation, le dispositif permet d'adapter la transparence de l'écran à transmission variable en fonction des champs de vision d'un capteur situé à l'avant et dans l'axe du véhicule 11 (tel que la caméra 17 ou le capteur RLT 15) et du capteur 16 situé sur les lunettes 10, et en fonction de l'orientation de la tête du conducteur. Les champs de vision des capteurs sont décomposables en champ de vision horizontal et en champ de vision vertical. Les figures 4 à 7 représentent les champs de vision horizontaux des capteurs selon différentes situations. Les caractéristiques relatives à ces champs de vision horizontaux et les adaptations de la transparence de l'écran à transmission variable par le dispositif en fonction de ces champs de vision horizontaux sont transposables de façon équivalente aux champs de vision verticaux des capteurs, non représentés sur les figures, avec des valeurs d'angles pouvant être différentes.

La figure 4 représente schématiquement la tête 32 d'un conducteur regardant dans l'axe 34 du véhicule. Le premier champ de vision horizontal d'un capteur situé à l'avant et dans l'axe du véhicule est représenté par un premier triangle 36 et le deuxième champ de vision horizontal du capteur situé sur les lunettes est représenté par un deuxième triangle 38. L'angle A1 du premier champ 36 de vision horizontal est par exemple environ 50° (soit ±25° de part et d'autre de l'axe du véhicule), et l'angle A2 du deuxième champ 38 de vision horizontal est par exemple environ 120° (soit ±60° de part et d'autre de l'axe 34 du véhicule. Idéalement, le deuxième champ 36 de vision horizontal correspond au champ de vision dans lequel l'œil humain, ici l'œil du conducteur, est susceptible d'être ébloui.

Le système de détection de l'orientation de la tête 32 du conducteur permet au dispositif de connaître l'orientation de la tête 32 du conducteur, et donc de l'orientation du capteur 16 situé sur les lunettes et ainsi du deuxième champ 38 de vision horizontal.

Quand le conducteur 24 tourne sa tête 32, comme représenté à la figure 5, le deuxième champ 38 de vision horizontal se déplace d'un angle O par rapport à l'axe 34 du véhicule. Le dispositif détecte ce déplacement par détection de l'orientation de la tête 32.

Le niveau de transparence est déterminé en fonction du niveau d'éblouissement (ou de luminosité, selon le type de capteur utilisé), calculé dans le champ de vision du conducteur. Le capteur situé à l'avant et dans l'axe du véhicule est un capteur dont l'information est plus robuste que le capteur 16 situé sur les lunettes car il ne risque pas d'être obstrué par un pare-soleil du véhicule 11 ou par un couvre-chef porté par le conducteur du véhicule. Ainsi, dans la situation représentée sur la figure 4, le capteur situé à l'avant et dans l'axe du véhicule est le seul pris en compte dans le calcul du niveau de transparence dans la zone 40 correspondant au premier champ 36 de vision horizontal. Néanmoins, le capteur 16 situé sur les lunettes a un deuxième champ 38 de vision horizontal plus large que le premier champ 36 de vision horizontal : ainsi, seules les données d'éblouissement situées dans les zones 42 et 44 du deuxième champ 38 de vision qui ne font pas partie du premier champ 36 de vision horizontal sont prises en compte.

Dans la situation représentée à la figure 5, le deuxième champ 38 de vision horizontal est déplacé selon un angle O suffisamment grand pour que les deux champs 36, 38 de vision horizontaux ne se superposent pas. Ainsi, comme le deuxième 38 champ de vision horizontal est sensiblement représentatif du champ de vision dans lequel le conducteur est susceptible d'être ébloui, le capteur 16 situé sur les lunettes est le seul pris en compte dans le calcul du niveau de transparence. En pratique, le capteur 16 situé sur les lunettes est le seul pris en compte si O>(A1+A2)/2, c'est-à-dire dans cet exemple (50+120)/2 = 85°. Cette situation est courante lors de la vérification de véhicules pouvant arriver sur le côté du véhicule 11 ou pour la vérification des angles morts.

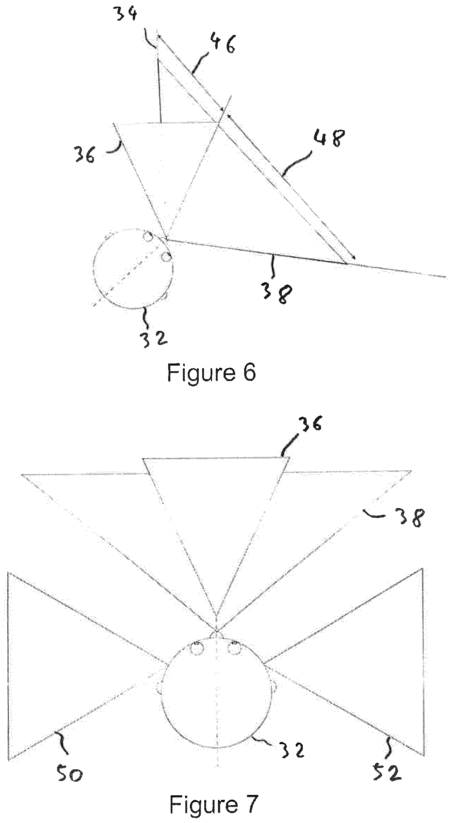

La figure 6 représente une situation où le conducteur oriente sa tête d'environ 45°. Les champs 36, 38 de vision des deux capteurs se superposent donc partiellement sur une zone 46. Comme expliqué précédemment, dans cette zone 46, seules les données provenant du capteur situé à l'avant et dans l'axe du véhicule sont prises en compte. Dans la zone 48 du deuxième champ 38 de vision horizontal, les données provenant du capteur 16 situé sur les lunettes sont prises en compte.

Selon un mode de réalisation de l'invention, pour permettre d'éviter au conducteur d'être ébloui par une source d'éblouissement quel que soit la position de ladite source dans son champ de vision, le calcul du coefficient à transmission variable est effectué en fonction de l'éblouissement le plus important mesuré par les capteurs dans son champ de vision.

Selon un mode de réalisation de l'invention représenté figure 7, pour améliorer les performances du dispositif en cas de changement rapide de l'orientation de la tête 32 du conducteur, des capteurs supplémentaires peuvent être utilisés pour couvrir des zones extérieures du champ de vision du conducteur afin de pouvoir anticiper les éventuels éblouissement provenant de ces zones si le conducteur oriente sa tête 32 dans la direction de ces zones. Par exemple, deux capteurs d'éblouissement supplémentaires peuvent être présents, chacun placés sur les branches des lunettes et couvrant les zones 50, 52 situées à gauche et à droite de la tête du conducteur, en dehors de son champ de vision. Si le conducteur ne change pas l'orientation de sa tête 32, ces capteurs supplémentaires mesurent l'éblouissement dans ces zones 50, 52 et ces mesures n'interviennent pas dans le calcul du coefficient de transmission de l'écran à transmission variable, qui est seulement dépendant des valeurs mesurés dans le premier 36 et le deuxième 38 champ de vision horizontal. Si le conducteur change l'orientation de sa tête 32 vers une des zones 50, 52 couvertes par ces capteurs supplémentaires, le dispositif va prendre en compte les données relevées par ces capteurs avant la rotation de la tête 32 pour anticiper le calcul du coefficient de transmission de l'écran à transmission variable.

Dans un mode de réalisation de l'invention, l'écran à transmission variable peut être couplé à un éclairage pulsé, en synchronisme ou non suivant les situations.

## Revendications

1. Dispositif d'aide à la conduite d'un véhicule automobile (11), comprenant un écran à transmission variable destiné à être disposé entre une scène de route à l'avant du véhicule (11) et un conducteur du véhicule, ledit dispositif comprenant plusieurs capteurs aptes à récupérer des données représentatives de l'environnement dans lequel se trouve le véhicule (11), ledit dispositif étant configuré pour piloter un coefficient de transmission de l'écran à transmission variable, le dispositif étant configuré pour prendre en compte les données récupérées par les capteurs et pour calculer le coefficient de transmission en combinant lesdites données, le dispositif étant **caractérisé en ce qu'**un premier desdits capteurs est un capteur configuré pour mesurer une luminosité dans l'axe du véhicule (11) et un second desdits capteurs est un capteur configuré pour mesurer une luminosité dans une autre direction, ledit dispositif étant configuré pour prendre en compte l'orientation de la tête du conducteur et effectuer ledit calcul en fonction des données relevées par le premier et le second capteur et en fonction de ladite orientation de la tête.

2. Dispositif d'aide selon la revendication 1, **caractérisé en ce que** les capteurs sont aptes à récupérer les données représentatives de l'environnement parmi un ou plusieurs des types de données suivantes :
- Les conditions atmosphériques,
- L'environnement routier,
- L'environnement du conducteur.

3. Dispositif d'aide selon l'une des revendications précédentes, **caractérisé en ce que** ledit dispositif est apte à déterminer une situation dans laquelle se trouve le véhicule (11) et/ou le conducteur à partir de toutes ou parties des données récupérées.

4. Dispositif d'aide selon la revendication 3, **caractérisé en ce que** ledit dispositif est apte à déterminer ladite situation à partir des données récupérées parmi les données suivantes :
- Les conditions atmosphériques,
- L'environnement routier,
- L'environnement du conducteur.

5. Dispositif d'aide selon la revendication 3 ou 4, **caractérisé en ce que** ledit dispositif est configuré pour attribuer un poids à tout ou partie des données récupérées en fonction de ladite situation du véhicule (11) et pour pondérer lesdites données par leur poids correspondant dans le calcul du coefficient de transmission.

6. Dispositif d'aide selon l'une des revendications 1 à 5, **caractérisé en ce que** ledit écran à transmission variable comprend des lunettes (10) et ledit second capteur est situé sur lesdites lunettes (10).

7. Dispositif d'aide selon l'une des revendications précédentes, comprenant un éclairage pulsé, ledit dispositif étant configuré pour piloter ledit éclairage pulsé, dans un premier mode en synchronisme avec le coefficient de transmission, et, dans un second mode, indépendamment dudit coefficient.

8. Procédé d'aide à la conduite d'un véhicule automobile (11), ledit véhicule (11) étant équipé d'un écran à transmission variable destiné à être disposé entre une scène de route à l'avant du véhicule (11) et un conducteur du véhicule, ledit procédé comportant une étape de récupération (27) de données représentatives de l'environnement dans lequel se trouve le véhicule (11), et une étape de pilotage (28) d'un coefficient de transmission de l'écran à transmission variable, **caractérisé en ce que** ledit procédé comporte une étape de prise en compte (29) des données récupérées dans l'étape de récupération et une étape de calcul (30) du coefficient de transmission par combinaison desdites données, et **en ce qu'**il comprend une étape de récupération de données de luminosité dans l'axe du véhicule (11) et dans une autre direction et une étape de détection de l'orientation de la tête du conducteur, procédé dans lequel ladite étape de calcul est effectuée en prenant compte lesdites données de luminosité en fonction de ladite orientation de la tête.

9. Procédé d'aide selon la revendication 8, **caractérisé en ce que** lesdites données représentatives de l'environnement sont choisies parmi un ou plusieurs des types de données suivant :
- Les conditions atmosphériques,
- L'environnement routier,
- L'environnement du conducteur.

10. Procédé d'aide selon l'une des revendications 8 ou 9, **caractérisé en ce qu'**il comprend une étape de détermination d'une situation dans laquelle se trouve le véhicule (11) à partir des données récupérées.

11. Procédé d'aide selon la revendication 10, **caractérisé en ce que** ladite étape de détermination de ladite situation s'effectue à partir des données récupérées parmi les données suivantes :
- Les conditions atmosphériques,
- L'environnement routier,
- L'environnement du conducteur.

12. Procédé d'aide selon la revendication 10 ou 11, **caractérisé en ce qu'**il comprend une étape d'attribution d'un poids à tout ou partie des données récupérées en fonction de ladite situation du véhicule (11) et **en ce qu'**il comprend une étape de pondération des données par leur poids correspondant pour le calcul du coefficient de transmission.

13. Procédé selon l'une des revendications 8 à 12, **caractérisé en ce qu'**il comprend une première étape de pilotage d'un éclairage pulsé du véhicule (11), en synchronisme avec le pilotage du coefficient de transmission et une seconde étape de pilotage desdits éclairage indépendamment de ce dernier pilotage du coefficient de transmission.

## Patentansprüche

1. Vorrichtung zur Fahrassistenz eines Kraftfahrzeugs (11), die einen Schirm mit variabler Durchlassung umfasst, der dazu bestimmt ist, zwischen einer Straßenszene an der Vorderseite des Fahrzeugs (11) und einem Fahrer des Fahrzeugs angeordnet zu sein, wobei die Vorrichtung mehrere Sensoren umfasst, die dazu geeignet sind, Daten zu erheben, die für die Umgebung, in der sich das Fahrzeug (11) befindet, repräsentativ sind, wobei die Vorrichtung konfiguriert ist, um einen Durchlasskoeffizienten des Schirms mit variabler Durchlassung zu steuern, wobei die Vorrichtung konfiguriert ist, um Daten, die von den Sensoren erhoben werden, zu berücksichtigen, und um den Durchlasskoeffizienten durch Kombinieren der Daten zu berechnen, wobei die Vorrichtung **dadurch gekennzeichnet ist, dass** ein erster der Sensoren ein Sensor ist, der konfiguriert ist, um eine Helligkeit in der Achse des Fahrzeugs (11) zu messen, und ein zweiter der Sensoren ein Sensor ist, der konfiguriert ist, um eine Helligkeit in einer anderen Richtung zu messen, wobei die Vorrichtung dazu konfiguriert ist, die Ausrichtung des Kopfs des Fahrers zu berücksichtigen und die Berechnung in Abhängigkeit von den Daten, die von dem ersten und dem zweiten Sensor erhoben werden, und in Abhängigkeit von der Ausrichtung des Kopfs auszuführen.

2. Vorrichtung zur Assistenz nach Anspruch 1, **dadurch gekennzeichnet, dass** die Sensoren dazu geeignet sind, die Daten, die für die Umgebung repräsentativ sind, aus einem oder mehreren der folgenden Datentypen zu erheben:
- aus den Wetterbedingungen,
- aus der Straßenumgebung,
- aus der Umgebung des Fahrers.

3. Vorrichtung zur Assistenz nach einem der vorstehenden Ansprüche, **dadurch gekennzeichnet, dass** die Vorrichtung dazu geeignet ist, eine Situation, in der sich das Fahrzeug (11) und/oder der Fahrer befindet, ausgehend von allen oder Teilen der erhobenen Daten zu bestimmen.

4. Vorrichtung zur Assistenz nach Anspruch 3, **dadurch gekennzeichnet, dass** die Vorrichtung dazu geeignet ist, die Situation ausgehend von den Daten, die aus den folgenden Daten erhoben werden, zu bestimmen:
- aus den Wetterbedingungen,
- aus der Straßenumgebung,
- aus der Umgebung des Fahrers.

5. Vorrichtung zur Assistenz nach Anspruch 3 oder 4, **dadurch gekennzeichnet, dass** die Vorrichtung konfiguriert ist, um allen oder einem Teil der erhobenen Daten in Abhängigkeit von der Situation des Fahrzeugs (11) ein Gewicht zuzuweisen, und um die Daten durch ihr entsprechendes Gewicht bei der Berechnung des Durchlasskoeffizienten zu gewichten.

6. Vorrichtung zur Assistenz nach einem der Ansprüche 1 bis 5, **dadurch gekennzeichnet, dass** der Schirm mit variabler Durchlassung eine Brille (10) umfasst, und dass sich der zweite Sensor auf der Brille (10) befindet.

7. Vorrichtung zur Assistenz nach einem der vorstehenden Ansprüche, die eine pulsierte Beleuchtung umfasst, wobei die Vorrichtung dazu konfiguriert ist, die pulsierte Beleuchtung im Gleichlauf mit dem Durchlasskoeffizienten zu steuern, und bei einem zweiten Modus unabhängig von dem Koeffizienten.

8. Verfahren zur Fahrassistenz eines Kraftfahrzeugs (11), wobei das Fahrzeug (11) mit einem Schirm mit variabler Durchlassung ausgestattet ist, der dazu bestimmt ist, zwischen einer Straßenszene an der Vorderseite des Fahrzeugs (11) und einem Fahrer des Fahrzeugs angeordnet zu sein, wobei das Verfahren einen Erhebungsschritt (27) von Daten, die für die Umgebung, in der sich das Fahrzeug (11) befindet, repräsentativ sind, und einen Steuerschritt (28) eines Durchlasskoeffizienten des Schirms mit variabler Durchlassung umfasst, **dadurch gekennzeichnet, dass** das Verfahren einen Berücksichtigungsschritt (29) der Daten, die bei dem Erhebungsschritt erhoben werden, und einen Berechnungsschritt (30) des Durchlasskoeffizienten durch Kombination der Daten umfasst, und dass es einen Erhebungsschritt von Helligkeitsdaten in der Achse des Fahrzeugs (11) und in eine andere Richtung sowie einen Erfassungsschritt der Ausrichtung des Kopfs des Fahrers umfasst, Verfahren, bei dem der Berechnungsschritt unter Berücksichtigung der Helligkeitsdaten in Abhängigkeit von der Ausrichtung des Kopfs erfolgt.

9. Verfahren zur Assistenz nach Anspruch 8, **dadurch gekennzeichnet, dass** die Daten, die für die Umgebung repräsentativ sind, aus einem oder mehreren der folgenden Datentypen ausgewählt sind:
- aus den Wetterbedingungen,
- aus der Straßenumgebung,
- aus der Umgebung des Fahrers.

10. Verfahren zur Assistenz nach einem der Ansprüche 8 oder 9, **dadurch gekennzeichnet, dass** es einen Bestimmungsschritt einer Situation, in der sich das Fahrzeug (11) befindet, ausgehend von den erhobenen Daten umfasst.

11. Verfahren zur Assistenz nach Anspruch 10, **dadurch gekennzeichnet, dass** der Bestimmungsschritt der Situation ausgehend von den erhobenen Daten aus den folgenden Daten erfolgt:
- aus den Wetterbedingungen,
- aus der Straßenumgebung,
- aus der Umgebung des Fahrers.

12. Verfahren zur Assistenz nach Anspruch 10 oder 11, **dadurch gekennzeichnet, dass** es einen Zuweisungsschritt eines Gewichts zu allen oder einem Teil der erhobenen Daten in Abhängigkeit von der Situation des Fahrzeugs (11) umfasst, und dass es einen Gewichtungsschritt der Daten durch ihr entsprechendes Gewicht für die Berechnung des Durchlasskoeffizienten umfasst.

13. Verfahren nach einem der Ansprüche 8 bis 12, **dadurch gekennzeichnet, dass** es einen ersten Steuerschritt einer gepulsten Beleuchtung des Fahrzeugs (11) in Gleichlauf mit dem Steuern des Durchlasskoeffizienten, und einen zweiten Steuerschritt der Beleuchtung unabhängig von diesem letzteren Steuern des Durchlasskoeffizienten umfasst.

## Claims

1. Driving assistance device for a motor vehicle (11), comprising a variable-transmission screen intended to be arranged between a road scene ahead of the vehicle (11) and a driver of the vehicle, said device comprising a plurality of sensors able to recover data representative of the surroundings in which the vehicle (11) is located, said device being configured so as to control a transmission coefficient of the variable-transmission screen, the device being configured so as to take into account the data recovered by the sensors and so as to calculate the transmission coefficient by combining said data, the device being **characterized in that** a first one of said sensors is a sensor configured so as to measure a brightness in the axis of the vehicle (11) and a second one of said sensors is a sensor configured so as to measure a brightness in another direction, said device being configured so as to take into account the orientation of the driver's head and perform said calculation on the basis of the data captured by the first and the second sensor and on the basis of said orientation of the head.

2. Assistance device according to Claim 1, **characterized in that** the sensors are able to recover the data representative of the surroundings from among one or more of the following types of data:
- The atmospheric conditions,
- The road surroundings,
- The driver's surroundings.

3. Assistance device according to either of the preceding claims, **characterized in that** said device is able to determine a situation of the vehicle (11) and/or the driver on the basis of all or some of the recovered data.

4. Assistance device according to Claim 3, **characterized in that** said device is able to determine said situation on the basis of recovered data from among the following data:
- The atmospheric conditions,
- The road surroundings,
- The driver's surroundings.

5. Assistance device according to Claim 3 or 4, **characterized in that** said device is configured so as to assign a weight to all or some of the recovered data on the basis of said situation of the vehicle (11) and so as to weight said data by their corresponding weight in the calculation of the transmission coefficient.

6. Assistance device according to one of Claims 1 to 5, **characterized in that** said variable-transmission screen comprises glasses (10) and said second sensor is located on said glasses (10).

7. Assistance device according to one of the preceding claims, comprising pulsed illumination, said device being configured so as to control said pulsed illumination, in a first mode, in synchronism with the transmission coefficient, and, in a second mode, independently of said coefficient.

8. Driving assistance method for a motor vehicle (11), said vehicle (11) being equipped with a variable-transmission screen intended to be arranged between a road scene ahead of the vehicle (11) and a driver of the vehicle, said method comprising a step of recovering (27) data representative of the surroundings in which the vehicle (11) is located, and a step of controlling (28) a transmission coefficient of the variable-transmission screen, **characterized in that** said method comprises a step of taking into account (29) the data recovered in the recovery step and a step of calculating (30) the transmission coefficient by combining said data, and **in that** it comprises a step of recovering brightness data in the axis of the vehicle (11) and in another direction and a step of detecting the orientation of the driver's head, in which method said calculation step is performed taking into account said brightness data on the basis of said orientation of the head.

9. Assistance method according to Claim 8, **characterized in that** said data representative of the surroundings are chosen from among one or more of the following types of data:
- The atmospheric conditions,
- The road surroundings,
- The driver's surroundings.

10. Assistance method according to either of Claims 8 and 9, **characterized in that** it comprises a step of determining a situation of the vehicle (11) on the basis of the recovered data.

11. Assistance method according to Claim 10, **characterized in that** said determination step is performed on the basis of recovered data from among the following data:
- The atmospheric conditions,
- The road surroundings,
- The driver's surroundings.

12. Assistance method according to Claim 10 or 11, **characterized in that** it comprises a step of assigning a weight to all or some of the recovered data on the basis of said situation of the vehicle (11) and **in that** it comprises a step of weighting said data by their corresponding weight in order to calculate the transmission coefficient.

13. Method according to one of Claims 8 to 12, **characterized in that** it comprises a first step of controlling pulsed illumination of the vehicle (11), in synchronism with the controlling of the transmission coefficient, and a second step of controlling said illumination independently of said controlling of the transmission coefficient.
